# FASCICULE DE BREVET EUROPEEN

(11) **EP 1 749 055 B1**
(45) Date de publication et mention de la délivrance du brevet: **31.08.2016**
(21) Numéro de dépôt: 05736921.7
(22) Date de dépôt: 29.04.2005
(51) Int. Cl.: C08K 13/02, B60C 1/00

(54) **COMPOSITION DE CAOUTCHOUC A ADHESION AMELIOREE VIS-A-VIS D"UN RENFORT METALLIQUE**
KAUTSCHUKZUSAMMENSETZUNG MIT VERBESSERTER HAFTUNG AUF EINER METALLVERSTÄRKUNG
RUBBER COMPOSITION EXHIBITING IMPROVED ADHESION TO A METAL REINFORCEMENT

(30) Priorité: 30.04.2004 FR 0404603
(43) Date de publication de la demande: 07.02.2007
(73) Titulaire: COMPAGNIE GENERALE DES ETABLISSEMENTS MICHELIN, 63000 Clermont-Ferrand (FR); Michelin Recherche et Technique S.A., 1763 Granges-Paccot (CH)
(72) Inventeur: BARBOTIN, Fanny, F-63000 Clermont-Ferrand (FR); CABIOCH, Jean-Luc, 63119 Chateaugay (FR); GREIVELDINGER, Marc, F-63140 Chatel-Guyon (FR); POUZET, Gérard, F-63120 Ceyrat (FR)
(74) Mandataire: Ribière, Joel
(86) Numéro de dépôt international: PCT/EP2005/004613
(87) Numéro de publication internationale: WO 2005/113666

(56) Documents cités:
- EP-A1- 0 960 890
- US-A- 4 785 033

## Description

La présente invention est relative aux compositions de caoutchouc et aux composites métal/ caoutchouc, notamment aux compositions et composites utilisables pour la fabrication de systèmes de liaison au sol des véhicules automobiles, en particulier de pneumatiques.

Elle est plus particulièrement relative aux systèmes adhésifs assurant, dans de tels composites, la liaison entre le métal et le caoutchouc.

Les composites métal/ caoutchouc, notamment pour pneumatiques, sont bien connus, ils sont généralement constitués d'une matrice en caoutchouc diénique, réticulable au soufre, comportant des éléments de renforcement (ou "renforts") métalliques, généralement sous forme de fil(s) ou d'assemblages de fils.

Soumis à des contraintes très importantes lors du roulage des pneumatiques, notamment à des compressions, flexions ou variations de courbure répétées, ces composites doivent de manière connue satisfaire à un grand nombre de critères techniques, parfois contradictoires, tels qu'uniformité, flexibilité, endurance en flexion et en compression, résistance à la traction, à l'usure et à la corrosion, et maintenir ces performances à un niveau très élevé aussi longtemps que possible.

On comprend aisément que l'interphase adhésive entre caoutchouc et métal joue un rôle prépondérant dans la pérennité de ces performances. Pour illustrer ceci, on peut rappeler notamment que le procédé traditionnel pour relier les compositions de caoutchouc à de l'acier au carbone consiste à revêtir la surface de l'acier avec du laiton (alliage cuivre-zinc), la liaison entre l'acier et la matrice de caoutchouc étant assurée par sulfuration du laiton lors de la vulcanisation ; pour améliorer l'adhésion, on utilise en outre fréquemment, dans lesdites compositions de caoutchouc, des sels organiques ou des complexes de cobalt en tant qu'additifs promoteurs d'adhésion (voir à titre d'exemple les documents de brevet FR-A-2 501 700 ou US-A-4 549 594 ; US-A-4 933 385 ; US-A-5 624 764).

Or, on sait que l'adhésion entre l'acier au carbone et la matrice de caoutchouc est susceptible de s'affaiblir au cours du temps, du fait de l'évolution progressive des sulfures sous l'effet des différentes sollicitations rencontrées, notamment mécaniques et/ou thermiques, le processus de dégradation ci-dessus pouvant être accéléré en présence d'humidité. D'autre part, l'utilisation de composés de cobalt, outre le fait qu'elle augmente significativement le coût des compositions de caoutchouc, augmente la sensibilité de ces dernières à l'oxydation et au vieillissement.

Poursuivant leurs recherches, les Demanderesses ont découvert de nouveaux additifs promoteurs d'adhésion, nettement moins coûteux que les composés de cobalt, qui, de manière inattendue, permettent d'améliorer eux aussi la performance adhésive des compositions de caoutchouc vis-à-vis de renforts métalliques, particulièrement après vieillissement thermique, en particulier sous conditions d'humidité. Ils peuvent à ce titre avantageusement remplacer tout ou partie des composés de cobalt précités.

En conséquence, un premier objet de l'invention est une composition de caoutchouc utilisable pour la fabrication d'un composite métal/ caoutchouc et susceptible d'adhérer à un renfort métallique, comportant au moins un élastomère diénique, une charge renforçante, un système de réticulation et un promoteur d'adhésion, caractérisée en ce que ledit promoteur d'adhésion comporte entre 0,1 et 10 pce d'un composé de lanthanide tel qu'énoncé en revendication 1.

L'invention concerne également l'utilisation comme promoteur d'adhésion vis-à-vis d'un renfort métallique, dans une composition de caoutchouc diénique, d'un tel composé de lanthanide à un taux compris entre 0,1 et 10 pce.

L'invention concerne également en soi un système promoteur d'adhésion métal/ caoutchouc caractérisé en ce que qu'il comporte en combinaison un composé de lanthanide et un composé de cobalt.

L'invention a également pour objet un composite métal/ caoutchouc comportant une composition de caoutchouc diénique selon l'invention et au moins un renfort métallique adhérent à ladite composition de caoutchouc.

Ce composite métal/ caoutchouc est caractérisé par une interphase adhésive métal-caoutchouc améliorée, offrant un niveau d'adhésion au moins aussi bon à l'état initial (directement après cuisson), comparé aux solutions connues antérieures, avec en outre des performances nettement améliorées après un vieillissement du type thermique, notamment sous conditions d'humidité.

L'invention concerne également l'utilisation d'un tel composite pour la fabrication ou le renforcement de systèmes de liaison au sol des véhicules automobiles, tels que pneumatique, appui interne de sécurité pour pneumatique, roue, ressort en caoutchouc, articulation élastomérique, autre élément de suspension et anti-vibratoire, ou encore de produits semi-finis en caoutchouc destinés à de tels systèmes de liaison au sol.

Le composite selon l'invention est particulièrement destiné aux armatures de renforcement du sommet, de la carcasse ou de la zone bourrelet de pneumatiques destinés à équiper des véhicules à moteur de type tourisme, SUV ("*Sport Utility Vehicles*"), deux roues (notamment motos), avions, comme des véhicules industriels choisis parmi camionnettes, "Poids-lourd" - c'est-à-dire métro, bus, engins de transport routier (camions, tracteurs, remorques), véhicules hors-la-route tels qu'engins agricoles ou de génie civil -, autres véhicules de transport ou de manutention.

L'invention concerne également les systèmes de liaison au sol et les produits semi-finis en caoutchouc eux-mêmes, lorsqu'ils comportent un composite conforme à l'invention. L'invention montre en particulier tout son intérêt dans les armatures de carcasse des pneumatiques pour véhicules Poids-lourd dont on attend aujourd'hui, grâce aux progrès techniques du rechapage, qu'elles soient capables d'endurer plus d'un million de kilomètres, ainsi que dans les armatures de sommet des pneumatiques destinés tant à des véhicules tourisme qu'à des véhicules industriels. La longévité des pneumatiques peut être ainsi sensiblement améliorée, en particulier celle des pneumatiques soumis à des conditions de roulage particulièrement sévères, notamment sous atmosphère humide et corrosive.

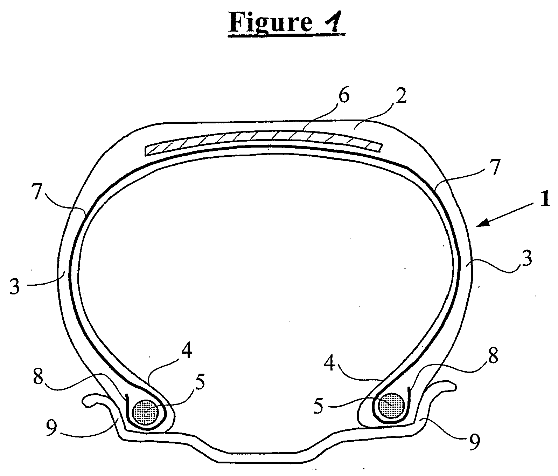

L'invention ainsi que ses avantages seront aisément compris à la lumière de la description et des exemples de réalisation qui suivent, ainsi que de la figure schématique relative à ces exemples qui représente une coupe radiale d'un pneumatique à armature de carcasse radiale.

### I. MESURES ET TESTS

### I-1. Mesures dynamométriques

En ce qui concerne les renforts (fils ou câbles) métalliques, les mesures de force à la rupture notée Fm (charge maximale en N), de résistance à la rupture notée Rm (en MPa) et d'allongement à la rupture noté At (allongement total en %) sont effectuées en traction selon la norme ISO 6892 de 1984. En ce qui concerne les compositions de caoutchouc, les mesures de module sont effectuées en traction, sauf indication expresse différente selon la norme ASTM D 412 de 1998 (éprouvette "C") ; on mesure en seconde élongation (i.e., après un cycle d'accommodation) les modules sécants vrais c'est-à-dire ramenés à la section réelle de l'éprouvette à 10% d'allongement, notés E10 et exprimés en MPa (conditions normales de température et d'hygrométrie selon la norme ASTM D 1349 de 1999).

### I-2. Test d'adhésion

La qualité de la liaison entre le renfort métallique et la matrice de caoutchouc est appréciée par un test dans lequel on mesure la force, dite force d'arrachement, nécessaire pour extraire le renfort métallique de la matrice de caoutchouc, à l'état vulcanisé.

Le composite métal/ caoutchouc utilisé dans ce test est un bloc de composition de caoutchouc, constitué de deux plaques de dimension 300 mm par 150 mm (millimètres) et d'épaisseur 3,5 mm, appliquées l'une sur l'autre avant la cuisson ; l'épaisseur du bloc résultant est alors de 7 mm. C'est lors de la confection de ce bloc que les renforts, par exemple au nombre de douze, sont emprisonnés entre les deux plaques crues ; seule une longueur de renfort déterminée, par exemple de 12,5 mm, est laissée libre pour venir au contact de la composition de caoutchouc à laquelle cette longueur de renfort se liera pendant la cuisson ; le reste de la longueur des renforts est isolé de la composition de caoutchouc (par exemple à l'aide d'un film plastique ou métallique) pour empêcher toute adhésion en dehors de la zone de contact déterminée. Chaque renfort traverse le bloc de caoutchouc de part en part, au moins une de ses extrémités libres étant conservée de longueur suffisante (au moins 5 cm, par exemple entre 5 et 10 cm) pour permettre le tractionnement ultérieur du renfort.

Le bloc comportant les douze renforts est alors placé dans un moule adapté puis cuit, sauf indication différente, pendant 40 minutes à 150°C, sous une pression d'environ 11 bars.

Après cuisson du composite, on applique, le cas échéant, les conditions de vieillissement accéléré qui suivent, permettant de déterminer la résistance des échantillons à l'action combinée de la chaleur et/ou de l'humidité, selon les cas :
- soit un vieillissement dit "thermique": les blocs de caoutchouc sont placés dans une étuve à une température de 135°C, pendant 16 heures ;
- soit un vieillissement dit "thermique et humide": les blocs de caoutchouc sont placés dans une étuve à une température de 105°C, pendant 16 heures et sous une humidité relative de 100%.

A l'issue de la cuisson et du vieillissement ultérieur éventuel, le bloc est découpé en éprouvettes servant d'échantillons, contenant chacune un renfort que l'on tractionne hors du bloc de caoutchouc, à l'aide d'une machine de traction ; la vitesse de traction est de 50 mm/min ; on caractérise ainsi l'adhérence par la force nécessaire pour arracher le renfort hors de l'éprouvette, à une température de 20°C ; la force d'arrachement (notée Fa) représente la moyenne des 12 mesures correspondant aux 12 renforts du composite.

### II. DESCRIPTION DETAILLEE DE L'INVENTION

Le composite métal/ caoutchouc de l'invention, utilisable pour la fabrication ou le renforcement de systèmes de liaison au sol des véhicules automobiles tels que par exemple des pneumatiques, comporte au moins une composition ou matrice de caoutchouc, elle-même objet de l'invention, et un renfort métallique auquel elle est susceptible d'adhérer, tous deux décrits en détail ci-après.

Dans la présente description, sauf indication expresse différente, tous les pourcentages (%) indiqués sont des % massiques.

### II-1. Composition de caoutchouc

La composition de l'invention est une composition élastomérique à base (i.e., comportant le mélange ou le produit de réaction) d'au moins un élastomère diénique, une charge renforçante, un système de réticulation et un promoteur d'adhésion.

Elle a pour caractéristique nouvelle et essentielle que ledit promoteur d'adhésion est constitué, en tout ou partie, d'un composé de lanthanide.

### A) Elastomère diénique

Par élastomère (ou indistinctement caoutchouc) "diénique", on entend de manière connue un élastomère issu au moins en partie (i.e., un homopolymère ou un copolymère) de monomères diènes (monomères porteurs de deux doubles liaisons carbone-carbone, conjuguées ou non).

Les élastomères diéniques peuvent être classés de manière connue en deux catégories : ceux dits "essentiellement insaturés" et ceux dits "essentiellement saturés". De manière générale, on entend ici par élastomère diénique "essentiellement insaturé" un élastomère diénique issu au moins en partie de monomères diènes conjugués, ayant un taux de motifs ou unités d'origine diénique (diènes conjugués) qui est supérieur à 15% (% en moles). C'est ainsi, par exemple, que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être mis en oeuvre dans les compositions conformes à l'invention :
(a) - tout homopolymère obtenu par polymérisation d'un monomère diène conjugué, ayant de préférence de 4 à 12 atomes de carbone ;
(b) - tout copolymère obtenu par copolymérisation d'un ou plusieurs diènes conjugués entre eux ou avec un ou plusieurs composés vinyle aromatique ayant de préférence de 8 à 20 atomes de carbone ;
(c) - un copolymère ternaire obtenu par copolymérisation d'éthylène, d'une α-oléfine ayant de préférence de 3 à 6 atomes de carbone avec un monomère diène non conjugué ayant de préférence de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène ;
(d) - un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est en premier lieu mise en oeuvre avec des élastomères diéniques essentiellement insaturés, en particulier du type (a) ou (b) ci-dessus.

Plus préférentiellement, l'élastomère diénique est choisi dans le groupe constitué par les polybutadiènes (BR), le caoutchouc naturel (NR), les polyisoprènes de synthèse (IR), les différents copolymères de butadiène, les différents copolymères d'isoprène, et les mélanges de ces élastomères. De tels copolymères sont plus préférentiellement choisis dans le groupe constitué par les copolymères de butadiène-styrène (SBR), que ces derniers soient préparés par polymérisation en émulsion (ESBR) comme en solution (SSBR), les copolymères d'isoprène-butadiène (BIR), les copolymères d'isoprène-styrène (SIR) et les copolymères d'isoprène-butadiène-styrène (SBIR).

Parmi les polybutadiènes, conviennent en particulier ceux ayant une teneur en unités -1,2 comprise entre. 4% et 80% ou ceux ayant une teneur en cis-1,4 supérieure à 80%. Parmi les polyisoprènes de synthèse, conviennent en particulier les cis-1,4-polyisoprènes, de préférence ceux ayant un taux de liaisons cis-1,4 supérieur à 90%. Parmi les copolymères de butadiène ou d'isoprène, on entend en particulier les copolymères obtenus par copolymérisation d'au moins l'un de ces deux monomères avec un ou plusieurs composés vinyle-aromatique ayant de 8 à 20 atomes de carbone. A titre de composés vinyle-aromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène. Les copolymères peuvent contenir entre 99% et 20% en poids d'unités diéniques et entre 1% et 80% en poids d'unités vinyle-aromatiques.

Les composites conformes à l'invention sont préférentiellement destinés aux pneumatiques, en particulier aux armatures de carcasse des pneumatiques pour véhicules industriels tels que camionnettes ou Poids-lourd, ainsi qu'aux armatures de sommet des pneumatiques destinés tant à des véhicules tourisme qu'à des véhicules industriels.

On utilise alors, de préférence, au moins un élastomère isoprénique, c'est-à-dire, de manière connue, un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. L'élastomère isoprénique est de préférence du caoutchouc naturel, ou un polyisoprène de synthèse du type cis-1,4 ayant de préférence un taux de liaisons cis-1,4 supérieur à 90%, plus préférentiellement encore supérieur à 98%.

En coupage avec l'élastomère isoprénique ci-dessus, les compositions de caoutchouc peuvent contenir des élastomères diéniques autres qu'isopréniques, notamment des élastomères SBR et/ou BR tels que précités, que l'élastomère isoprénique soit présent à titre majoritaire ou non parmi l'ensemble des élastomères diéniques utilisés.

Ainsi, selon un mode particulier de réalisation de l'invention, on peut utiliser par exemple, en coupage avec l'élastomère isoprénique, notamment avec du caoutchouc naturel, un copolymère SBR ayant une Tg (température de transition vitreuse, mesurée selon ASTM D3418) comprise de préférence entre -70°C et -10°C, qu'il soit préparé en émulsion (ESBR) ou en solution (SSBR), selon une proportion de 0 à 70 pce (parties en poids pour cent parties d'élastomère), le reste (30 à 100 pce) étant constitué par l'élastomère isoprénique. On utilise alors plus particulièrement un SSBR. Auxdits SBR (SSBR ou ESBR) peut être également associé un BR possédant de préférence plus de 90% de liaisons cis-1,4, ledit BR ayant une Tg comprise de préférence entre -110°C et -50°C.

La matrice de caoutchouc peut contenir un seul ou plusieurs élastomères diéniques, ce dernier ou ces derniers pouvant être utilisé(s) en association avec tout type d'élastomère synthétique autre que diénique, voire avec des polymères autres que des élastomères, par exemple des polymères thermoplastiques.

### B) Charge renforçante

On peut utiliser tout type de charge renforçante connue pour ses capacités à renforcer une composition de caoutchouc utilisable pour la fabrication de pneumatiques, par exemple une charge organique telle que du noir de carbone, ou encore une charge inorganique renforçante telle que de la silice à laquelle est associé de manière connue un agent de couplage.

On utilise préférentiellement du noir de carbone. Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772).

Par "charge inorganique renforçante", doit être entendu ici toute charge inorganique ou minérale, quelles que soient sa couleur et son origine (naturelle ou de synthèse), encore appelée charge "blanche" ou parfois charge "claire" par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Comme charges inorganiques renforçantes conviennent notamment des charges minérales du type siliceuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber. Comme exemples d'alumines renforçantes, on peut citer les alumines "Baikalox" "A125" ou "CR125" de la société Baïkowski, "APA-100RDX" de Condea, "Aluminoxid C" de Degussa ou "AKP-G015" de Sumitomo Chemicals.

Pour coupler la charge inorganique renforçante à l'élastomère diénique, on utilisera de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

De manière préférentielle, le taux de charge renforçante totale (noir de carbone et/ou charge inorganique renforçante) est compris entre 20 et 200 pce, plus préférentiellement entre 30 et 150 pce, l'optimum étant de manière connue différent selon les applications visées.

### C) Système de réticulation

Le système de réticulation est préférentiellement un système de vulcanisation, c'est-à-dire un système à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine).

Le soufre est utilisé à un taux préférentiel compris entre 0,5 et 10 pce, plus préférentiellement compris entre 1 et 8 pce, en particulier entre 1 et 6 pce lorsque la composition de l'invention est destinée, selon un mode préférentiel de l'invention, à constituer une "gomme" (ou composition de caoutchouc) interne d'un pneumatique. L'accélérateur primaire de vulcanisation est utilisé à un taux préférentiel compris entre 0,5 et 10 pce, plus préférentiellement compris entre 0,5 et 5,0 pce.

On peut utiliser comme accélérateur tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs primaires sont plus préférentiellement choisis dans le groupe constitué par disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI") et les mélanges de ces composés.

### D) Composé de lanthanide

On rappelle que le terme de "lanthanide " est réservé aux métaux, dits de "terres rares", dont le numéro atomique varie de 57 (lanthane) à 71 (lutétium).

De préférence, le lanthanide est choisi dans le groupe constitué par lanthane, cérium, praséodyme, néodyme, samarium, erbium et les mélanges de ces terres rares. On utilise plus préférentiellement le cérium ou le néodyme, en particulier le néodyme.

On utilise un composé organique de lanthanide ou « organolanthanide » choisi dans le groupe constitué par les abiétates, acétates, acétylacétonates, benzoates, butyrates, formiates, linoléates, maléates, oléates, propionates, naphténates, résinates, stéarates, et les mélanges (sels, complexes, ou autres dérivés mixtes) de tels composés. Les acétylacétonates et les naphténates sont les organolanthanides préférés dans la majorité des cas, plus particulièrement les acétylacétonates.

Dans la composition conforme à l'invention, le taux de composé de lanthanide est compris entre 0,1 et 10 pce. En dessous de 0,1 pce, l'effet technique visé risque d'être insuffisant, alors qu'au-delà de 10 pce, on s'expose à une augmentation des coûts et au risque de dégrader certaines propriétés mécaniques des compositions, à l'état initial comme après vieillissement. Pour ces différentes raisons, ledit taux de composé de lanthanide est plus préférentiellement compris entre 0,2 et 5 pce, encore plus préférentiellement compris entre 0,5 et 2,5 pce.

On rappelle ici que les composés de lanthanide, par exemple des sels de néodyme tels que des carboxylates, ont été essentiellement utilisés jusqu'ici comme catalyseurs de polymérisation de polymères ou élastomères tels que diènes (voir à titre d'exemples US-A-3 803 053, US-A-5 484 897, US-A-5 858 903, US-A-5 914 377, US-B-6 800 705).

### E) Autres constituants

Les matrices de caoutchouc des composites conformes à l'invention comportent également tout ou partie des additifs habituellement utilisés dans les compositions de caoutchouc destinées à la fabrication de systèmes de liaison au sol des véhicules automobiles, en particulier de pneumatiques, tels que par exemple des agents anti-vieillissement, des antioxydants, des plastifiants ou des huiles d'extension que ces derniers soient de nature aromatique ou non-aromatique, notamment des huiles très faiblement ou non aromatiques (e.g., huiles naphténiques ou paraffiniques, huiles MES ou TDAE), des agents facilitant la mise en oeuvre des compositions à l'état cru, un système de réticulation à base soit de soufre, soit de donneurs de soufre et/ou de peroxyde, des accélérateurs, des activateurs ou retardateurs de vulcanisation, des agents antiréversion tels que par exemple l'hexathiosulfonate de sodium ou le N,N'-m-phénylène-biscitraconimide, des accepteurs et donneurs de méthylène (par exemple résorcinol, HMT ou H3M) ou autres résines renforçantes, bismaléimides, d'autres systèmes promoteurs d'adhésion vis-à-vis de renforts métalliques notamment laitonnés, comme par exemple ceux du type "RFS" (résorcinol-formaldéhyde-silice) voire encore d'autres sels métalliques comme par exemple des sels organiques de cobalt ou de nickel. L'homme du métier saura ajuster la formulation de la composition en fonction de ses besoins particuliers.

Pour renforcer les performances de la composition et du composite de l'invention, un mode de réalisation particulier consiste à utiliser un composé bismaléimide. Ce type de composé, utilisable sans agent durcisseur, possède une cinétique de cuisson bien adaptée à celle des pneumatiques, il est susceptible d'activer la cinétique d'adhésion et d'améliorer encore, dans les composites conformes à l'invention, l'endurance en conditions de vieillissement humide des interphases adhésives.

On rappelle que les bismaléimides répondent, de manière connue, à la formule suivante: 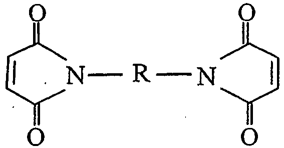 dans laquelle R est un radical hydrocarboné, aromatique ou aliphatique, cyclique ou acyclique, substitué ou non substitué, un tel radical pouvant comporter un hétéroatome choisi parmi O, N et S ; ce radical R comporte de préférence de 2 à 24 atomes de carbone.

On utilise plus préférentiellement une bismaléimide choisie dans le groupe constitué par les N,N'-éthylène-bismaléimides, N,N'-hexaméthylène-bismaléimides, N,N'-(m-phénylène)-bismaléimides, N,N'-(p-phénylène)-bismaléimides, N,N'-(p-tolylène)-bismaléimides, N,N'-(méthylènedi-p-phénylène)-bismaléimides, les N,N'-(oxydi-p-phénylène)-bismaléimides et les mélanges de ces composés. De telles bismaléimides sont bien connues de l'homme du métier.

Dans le cas où une résine renforçante ou une bismaléimide est utilisée, elle est présente dans le composite de l'invention à un taux préférentiel compris entre 0,1 et 20%, plus préférentiellement entre 1 et 8% en poids de composition de caoutchouc. Pour des taux supérieurs aux maxima indiqués, on s'expose à des risques de rigidification excessive des compositions, et donc à une fragilisation des composites ; pour des taux inférieurs aux minima indiqués, l'effet technique visé risque d'être insuffisant.

Selon un mode préférentiel de réalisation de l'invention, la composition comporte, en association avec le composé de lanthanide, au moins un composé de cobalt selon un taux préférentiel compris entre 0,1 et 10 pce. On a constaté qu'une certaine synergie pouvait exister entre les deux composés, se traduisant en particulier par une plus forte amélioration de la performance adhésive en conditions de vieillissement thermique et humide. Pour les mêmes raisons que celles indiquées précédemment pour le composé de lanthanide, le taux de composé de cobalt est alors plus préférentiellement compris entre 0,2 et 5 pce, encore plus préférentiellement compris entre 0,5 et 2,5 pce.

Le composé de cobalt est préférentiellement un composé organique de cobalt, choisi plus préférentiellement dans le groupe constitué par les abiétates, acétates, acétylacétonates, benzoates, butyrates, formiates, linoléates, maléates, oléates, propionates, naphténates, résinates, stéarates, et les mélanges (c'est-à-dire sels, complexes, ou autres dérivés mixtes) de tels composés, en particulier parmi les abiétates, acétylacétonates, naphténates, résinates et les mélanges de tels composés. Les acétylacétonates et naphténates sont préférés dans la majorité des cas.

### F) Préparation des compositions de caoutchouc

Les compositions sont fabriquées dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, phase de finition au cours de laquelle est incorporé le système de réticulation.

A titre d'exemple, la phase non-productive est conduite en une seule étape thermomécanique de quelques minutes (par exemple entre 2 et 10 min) au cours de laquelle on introduit, dans un mélangeur approprié tel qu'un mélangeur interne usuel, tous les constituants de base nécessaires et autres additifs, à l'exception du système de réticulation ou vulcanisation. Après refroidissement du mélange ainsi obtenu, on incorpore alors dans un mélangeur externe tel qu'un mélangeur à cylindres, maintenu à basse température (par exemple entre 30°C et 100°C), le système de vulcanisation. L'ensemble est alors mélangé (phase productive) pendant quelques minutes (par exemple entre 5 et 15 min).

La composition finale ainsi obtenue peut ensuite être calandrée, par exemple sous la forme d'une feuille, d'une plaque ou encore extrudée, par exemple pour former un profilé de caoutchouc utilisé pour la fabrication d'un composite ou d'un produit semi-fini, tel que par exemple des nappes, bandes, sous-couches, autres blocs de caoutchouc renforcés de renforts métalliques, destinés à former par exemple une partie de la structure d'un pneumatique.

La vulcanisation (ou cuisson) peut ensuite être conduite de manière connue à une température généralement comprise entre 130°C et 200°C, de préférence sous pression, pendant un temps suffisant qui peut varier par exemple entre 5 et 90 min en fonction notamment de la température de cuisson, du système de vulcanisation adopté et de la cinétique de vulcanisation de la composition considérée.

L'invention concerne les compositions et composites de caoutchouc tant à l'état dit "cru" (i.e. avant cuisson) qu'à l'état dit "cuit" ou vulcanisé (i.e. après vulcanisation).

### II-2. Renfort métallique

Par "renfort métallique" doit être entendu tout élément de renforcement apte à renforcer la matrice de caoutchouc, qu'il soit entièrement métallique ou pas, dont au moins la surface ou partie externe, destinée à entrer au contact du caoutchouc, est en métal.

Ce renfort peut se présenter sous différentes formes, préférentiellement sous la forme d'un fil unitaire (monofil), d'un film (par exemple un feuillard ou un ruban) ou d'un assemblage de fils, que ces fils soient tordus entre eux (par exemple, sous la forme d'un câble) ou essentiellement parallèles entre eux (par exemple sous la forme d'un paquet de fils, d'une fibre continue ou encore d'un ensemble de fibres courtes).

Dans les composites et pneumatiques de l'invention, ce renfort se présente plus préférentiellement sous la forme d'un fil unitaire ou d'un assemblage de fils, par exemple d'un câble ou d'un toron fabriqué avec des dispositifs et procédés de câblage ou toronnage connus de l'homme du métier, qui ne sont pas décrits ici pour la simplicité de l'exposé.

Le métal, ou métal de surface le cas échéant, du renfort métallique est de préférence choisi parmi Fe, Cu, Zn, Al, Sn, Ni, Co, Cr, Mn, les oxydes, hydroxydes et alliages de ces éléments, plus préférentiellement parmi Fe, Cu, Zn, Al, Sn, leurs oxydes, hydroxydes et alliages.

On utilise de préférence un renfort en acier, en particulier en acier perlitique (ou ferrito-perlitique) au carbone dénommé de manière connue "acier au carbone", ou encore en acier inoxydable tels que décrits par exemple dans les demandes de brevet EP-A-648 891 ou WO98/41682. Mais il est bien entendu possible d'utiliser d'autres aciers ou d'autres alliages.

Lorsqu'un acier au carbone est utilisé, sa teneur en carbone est de préférence comprise entre 0,1% et 1,2%, notamment entre 0,5% et 1,1% (% en poids d'acier); elle est plus préférentiellement comprise entre 0,6% et 1,0%, une telle teneur représentant un bon compromis entre les propriétés mécaniques requises pour le pneumatique et la faisabilité des fils.

L'homme du métier sait adapter la composition de l'acier en fonction de ses besoins propres particuliers, en utilisant par exemple des aciers au carbone micro-alliés contenant des éléments d'addition spécifiques tels que Cr, Ni, Co, V, ou divers autres éléments connus (voir par exemple Research Disclosure 34984 - "Micro-alloyed steel cord constructions for tyres" - mai 1993 ; Research Disclosure 34054 - "High tensile strength steel cord constructions for tyres "- août 1992).

Comme indiqué précédemment, le métal ou l'acier utilisé, qu'il s'agisse en particulier d'un acier au carbone ou d'un acier inoxydable, peut être utilisé tel quel (acier dit "clair") ou être lui-même revêtu d'une couche métallique supplémentaire améliorant par exemple les propriétés de mise en oeuvre du renfort métallique et/ou de ses éléments constitutifs, ou les propriétés d'usage du renfort et/ou du composite eux-mêmes.

Selon un mode de réalisation préférentiel, l'acier utilisé, notamment lorsqu'il s'agit d'un acier au carbone, est recouvert d'une couche supplémentaire de métal choisi parmi l'aluminium, le zinc, le cuivre et les alliages binaires ou ternaires de ces métaux.

Parmi les alliages d'aluminium, on utilise de préférence ceux choisis parmi les alliages binaires Al-Mg, Al-Cu, Al-Ni, Al-Zn et les alliages ternaires d'Al et de deux des éléments Mg, Cu, Ni, Zn, plus particulièrement un alliage Al-Zn.

Parmi les alliages de zinc, on utilise de préférence ceux choisis parmi les alliages binaires Zn-Cu, Zn-Al, Zn-Mn, Zn-Co, Zn-Mo, Zn-Fe, Zn-Ni, Zn-Sn et les alliages ternaires de Zn et de deux des éléments (par exemple Zn-Cu-Ni ou encore Zn-Cu-Co), plus particulièrement un alliage Zn-Cu (laiton) ou un alliage Zn-Al tel que précité.

Parmi les alliages de cuivre, les alliages binaires préférentiels sont ceux de Cu-Zn (laiton précité) et de Cu-Sn (bronze).

Lorsqu'une couche métallique supplémentaire est déposée sur le renfort métallique ou sur les éléments individuels constitutifs de ce renfort, notamment lorsqu'il s'agit d'un assemblage, on peut utiliser tout procédé de dépôt susceptible d'appliquer, en continu ou en discontinu, un revêtement métallique sur un substrat métallique. On utilise par exemple une technique simple de trempage au défilé, dans un bain contenant le métal ou l'alliage à l'état liquide, une technique de dépôt par voie électrolytique, ou encore par pulvérisation.

Dans le cas le plus fréquent où le renfort utilisé est un câble constitué de fils fins, la couche métallique supplémentaire sera de préférence déposée sur les fils, et non sur le câble final. Dans un tel cas, notamment pour faciliter les opérations de tréfilage, le dépôt sera réalisé avantageusement sur un fil de diamètre dit "intermédiaire", par exemple de l'ordre du millimètre, en sortie du dernier traitement thermique (patentage) précédant l'étape de tréfilage final humide pour l'obtention du fil fin ayant le diamètre final visé.

Lorsque les composites de l'invention sont utilisés pour renforcer des armatures de carcasse ou de sommet de pneumatiques radiaux, les renforts utilisés sont de préférence des assemblages (torons ou câbles) de fils fins en acier au carbone ou en acier inoxydable ayant :
- une résistance en traction supérieure à 2000 MPa, plus préférentiellement supérieure à 2500 MPa, en particulier supérieure à 3000 MPa ; l'homme du métier sait comment fabriquer des fils fins présentant une telle résistance, en ajustant notamment la composition de l'acier et les taux d'écrouissage final de ces fils ;
- pour un bon compromis résistance/tenue en flexion/faisabilité, un diamètre φ compris entre 0,10 et 0,40 mm, plus préférentiellement entre 0,10 et 0,30 mm environ lorsque le composite est destiné à renforcer une armature de carcasse, entre 0,20 et 0,40 mm environ lorsque le composite est destiné à renforcer une armature de sommet.

Lorsque les composites de l'invention sont utilisés pour renforcer des zones bourrelet de pneumatiques, les renforts peuvent se présenter notamment sous forme de tringles constituées de fils en acier au carbone ou en acier inoxydable, unitaires ou assemblés, ces fils ayant :
- une résistance en traction supérieure à 1500 MPa, plus préférentiellement supérieure à 2000 MPa ;
- un diamètre φ (ou une dimension caractéristique, s'il s'agit d'un fil autre que cylindrique) compris entre 0,5 et 3 mm, plus préférentiellement entre 0,8 et 2,2 mm.

### II-3. Composite et pneumatique de l'invention

La composition de caoutchouc de l'invention et le renfort métallique précédemment décrits sont utilisables pour la fabrication d'un composite métal/caoutchouc qui constitue un autre objet de l'invention, composite dans lequel l'adhésion entre le métal et le caoutchouc est assurée grâce à l'utilisation dans ladite composition du composé de lanthanide.

Ce composite peut se présenter sous des formes variées, par exemple sous la forme d'une nappe, d'une bande, bandelette ou d'un bloc de caoutchouc dans lesquels est incorporé le renfort métallique, ou encore d'une gaine de caoutchouc enrobant le renfort métallique, ce dernier étant au contact direct de la composition de caoutchouc. L'adhésion définitive entre le métal et la composition de caoutchouc peut être obtenue à l'issue de la cuisson de l'article fini comportant le composite ; de préférence, cette cuisson est opérée sous pression.

Les composites selon l'invention sont préférentiellement destinés à des pneumatiques, en particulier à des pneumatiques radiaux pour former tout ou partie de l'armature de sommet, de l'armature de carcasse ou l'armature de la zone bourrelet de tels pneumatiques.

A titre d'exemple, la figure annexée représente de manière très schématique une coupe radiale d'un pneumatique 1 à armature de carcasse radiale conforme à l'invention, destiné à un véhicule Poids-lourd comme à un véhicule tourisme dans cette représentation générale.

Ce pneumatique 1 comporte un sommet 2, deux flancs 3, deux bourrelets 4, une armature de carcasse 7 s'étendant d'un bourrelet à l'autre. Le sommet 2, surmonté d'une bande de roulement (non représentée sur cette figure schématique, pour simplification), est de manière connue en soi renforcé par une armature de sommet 6 constituée par exemple d'au moins deux nappes sommet croisées superposées (nappes sommet dites "de travail"), recouvertes éventuellement d'au moins une nappe de protection ou une nappe sommet de frettage à zéro degré. L'armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est constituée d'au moins une nappe renforcée par des câbles dits "radiaux", c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

Bien entendu, ce pneumatique 1 comporte en outre de manière connue une couche de gomme ou élastomère intérieure (communément appelée "gomme intérieure") qui définit la face radialement interne du pneumatique et qui est destinée à protéger la nappe de carcasse de la diffusion d'air provenant de l'espace intérieur au pneumatique. Avantageusement, en particulier dans le cas d'un pneumatique pour véhicule Poids-lourd, il peut comporter en outre une couche élastomère intermédiaire de renfort qui est située entre la nappe de carcasse et la couche intérieure, destinée à renforcer la couche intérieure et, par conséquent, la nappe de carcasse, également destinée à délocaliser partiellement les efforts subis par l'armature de carcasse.

Le pneumatique conforme à l'invention a pour caractéristique essentielle de comporter dans sa structure au moins un composite métal/ caoutchouc conforme à l'invention, ce composite pouvant être, par exemple, une partie de la zone bourrelet 4 comportant la tringle 5, une nappe sommet croisée ou une nappe de protection de l'armature de sommet 6, une nappe formant tout ou partie de l'armature de carcasse 7.

Comme indiqué précédemment, le composite de l'invention est avantageusement utilisable dans les armatures de sommet de tous types de pneumatiques, par exemple pour véhicules Tourisme, camionnettes ou Poids-lourd. De préférence, dans un tel cas, la composition de caoutchouc de l'invention présente à l'état vulcanisé (i.e., après cuisson), un module E10 qui est supérieur à 4 MPa, plus préférentiellement compris entre 6 et 20 MPa, par exemple entre 6 et 15 MPa.

Mais le composite de l'invention peut avoir une utilisation tout aussi avantageuse dans une armature carcasse d'un pneumatique pour véhicule industriel tel que Poids-lourd. De préférence, dans un tel cas, la composition de caoutchouc de l'invention présente, à l'état vulcanisé, un module E10 qui est inférieur à 9 MPa, plus préférentiellement compris entre 4 et 9 MPa.

### III. EXEMPLES DE REALISATION DE L'INVENTION

### III-1. Préparation des compositions de caoutchouc

On procède pour les essais qui suivent de la manière suivante: on introduit dans un mélangeur interne, rempli à 70% et dont la température initiale de cuve est d'environ 60°C, l'élastomère diénique (ou le mélange d'élastomères diéniques, le cas échéant), la charge renforçante et les divers autres ingrédients à l'exception du système de vulcanisation. On conduit alors un travail thermomécanique (phase non-productive) en une seule étape (durée totale du malaxage égale par exemple à environ 7 min) jusqu'à atteindre une température maximale de "tombée" d'environ 165-170°C. On récupère le mélange ainsi obtenu, on le refroidit puis on ajoute le système de vulcanisation (soufre et accélérateur sulfénamide) sur un mélangeur externe (homo-finisseur) à 30°C, en mélangeant le tout (phase productive) par exemple pendant 3 à 10 min.

Les compositions ainsi obtenues sont ensuite soit extrudées sous la forme de plaques (épaisseur de 2 à 3 mm) pour la mesure de leurs propriétés physiques ou mécaniques, soit calandrées pour réalisation d'un tissu câblé métallique constituant une partie de l'armature de sommet d'un pneumatique pour véhicule tourisme.

On utilise dans les essais qui suivent huit compositions ou matrices de caoutchouc différentes, notées M-1 à M-8, à base de caoutchouc naturel et de noir de carbone, présentant après cuisson un module E10 compris entre 8 et 12 MPa (environ 11 MPa pour les compositions M-1 à M-4 et environ 9 MPa pour les matrices M-5 à M-8).

Les formulations de ces compositions ont été reportées dans les tableaux 1 et 2 annexés. Elles comportent essentiellement, en plus de l'élastomère et de la charge renforçante, une huile paraffinique, un antioxydant, de l'oxyde de zinc, de l'acide stéarique, du soufre et un accélérateur sulfénamide, pour certaines d'entre elles (M-1 à M-4) une résine renforçante (résine phénolique plus donneur de méthylène), enfin un promoteur d'adhésion métal/ caoutchouc comportant soit un composé de cobalt seul pour les compositions témoins (M-1 et M-5), soit un composé de cobalt et un composé de lanthanide pour les compositions conformes à l'invention (M-2 à M-4, M-6 à M-8).

### III-2. Renforts métalliques

On utilise des câbles constitués de fils fins en acier au carbone, revêtus de laiton, adaptés au renforcement d'armatures de sommet de pneus tourisme.

Les fils fins en acier au carbone sont préparés en partant par exemple de fils machine (diamètre 5 à 6 mm) que l'on écrouit tout d'abord, par laminage et/ou tréfilage, jusqu'à un diamètre intermédiaire voisin de 1 mm, ou encore en partant directement de fils commerciaux intermédiaires dont le diamètre est voisin de 1 mm. L'acier utilisé est un acier au carbone connu, par exemple du type USA AISI 1069 dont la teneur en carbone est de 0,8% environ, comportant 0,5% de manganèse environ, le reste étant constitué de fer et des impuretés inévitables habituelles liées au procédé de fabrication de l'acier (pour exemple, teneurs en silicium : 0,25% ; phosphore : 0,01%; soufre : 0,01%; chrome : 0,11%; nickel : 0,03% ; cuivre: 0,01%; aluminium : 0,005%; azote : 0,003%). Les fils de diamètre intermédiaire subissent alors un traitement de dégraissage et/ou décapage, avant leur transformation ultérieure. Après dépôt d'un revêtement de laiton ou zinc sur ces fils intermédiaires, on effectue sur chaque fil un écrouissage dit "final" (i.e., mis en oeuvre après le dernier traitement thermique de patentage), par tréfilage à froid en milieu humide avec un lubrifiant de tréfilage qui se présente par exemple sous forme d'une émulsion ou d'une dispersion aqueuses.

Les câbles utilisés sont des câbles de construction connue [1+2], non frettée, formés de 3 fils de diamètre égal à environ 0,26 mm (Fm = 180 N ; Rm = 3200 MPa ; At = 2,3%) ; ces câbles comportent un seul fil d'âme, droit, autour duquel sont enroulés ensemble en hélice (direction S) deux autres fils selon un pas de 12 mm. Chaque fil en acier au carbone est revêtu d'une couche de laiton (64% de cuivre et 36% de zinc). Le revêtement de laiton a une épaisseur très faible, nettement inférieure au micromètre, ce qui équivaut à environ 0,35 à 0,40 g de laiton pour 100 g de fil. Les propriétés mécaniques de ces câbles sont les suivantes : Fm = 480 N ; Rm = 3000 MPa ; At = 2,7%.

### III-3. Composites - Tests d'adhésion

A partir des 8 matrices de caoutchouc M-1 à M-8 et des renforts métalliques précédemment décrits, on prépare par calandrage 8 composites acier au carbone/ caoutchouc, notés respectivement C-1 à C-8, ayant la forme des blocs de caoutchouc destinés au test d'adhésion décrit au paragraphe I-2 précédent.

### A) Essai 1

On compare dans ce premier essai les performances adhésives des composites C-1 à C-4 soumis aux conditions de "vieillissement thermique".

Le composite C-1 est le témoin comportant une matrice de caoutchouc conventionnelle comportant par ailleurs une résine renforçante et un composé de cobalt à titre de promoteur d'adhésion (matrice M-1). Les composites C-2 à C-4, tous trois conformes à l'invention, se distinguent seulement par la présence additionnelle d'un organolanthanide (néodyme, cérium ou samarium) dans leur matrice de caoutchouc (M-2 à M-4).

Les résultats obtenus au test d'adhésion sont résumés dans le tableau 3 annexé, en unités relatives ("u.r."), la base 100 étant retenue pour la force d'arrachement initiale (directement après cuisson) enregistrée sur le composite témoin.

On note tout d'abord que les composites selon l'invention présentent tous une adhésion initiale (force d'arrachement Fa) qui est légèrement supérieure à celle du témoin (C-1) caractérisé pourtant par un niveau d'adhésion de départ qui est très élevé (de l'ordre de 30 daN) pour le composite considéré.

Après vieillissement thermique, on observe que la force d'arrachement Fa du composite témoin est diminuée de moitié, alors qu'elle ne subit, de manière inattendue, qu'une faible altération pour les composites de l'invention, ne dépassant pas 25% environ, à la précision de mesure près, par rapport à la valeur de référence. Le meilleur résultat est obtenu ici avec le composé organique de cérium (composite C-3), offrant une adhésion légèrement améliorée à l'état initial (+ 4%) et pratiquement pas dégradée après vieillissement thermique, ce qui est remarquable comparativement au composite témoin C-1.

L'ajout du composé organolanthanide permet donc d'améliorer légèrement l'adhésion initiale et d'augmenter de manière considérable la performance adhésive après vieillissement thermique.

### B) Essai 2

Pour confirmer l'effet bénéfique de l'invention, on compare dans cet essai les performances adhésives des composites C-5 à C-8 soumis cette fois aux conditions de "vieillissement thermique et humide". Le composite C-5 est le témoin comportant une matrice de caoutchouc conventionnelle contenant notamment un composé de cobalt à titre de promoteur d'adhésion et dépourvue par ailleurs de résine renforçante (matrice M-5). Les composites C-6 à C-8, tous trois conformes à l'invention, se distinguent seulement par la présence additionnelle. d'organolanthanide (néodyme, cérium ou samarium) dans leur matrice de caoutchouc (M-6 à M-8).

Les résultats obtenus sont résumés dans le tableau 4 annexé, en unités relatives (base 100 pour la force Fa initiale enregistrée sur le composite témoin C-5).

On note que le niveau d'adhésion de départ est toujours très élevé, quel que soit le composite considéré. Après vieillissement, on constate que la force d'arrachement Fa du composite témoin est diminuée de 65%, alors qu'elle ne subit comparativement qu'une très faible altération, ne dépassant pas 25% environ, dans les composites de l'invention, malgré un vieillissement sévère. Le meilleur résultat est observé sur le composite C-7 (cérium), avec une adhésion améliorée de plus de 20% à l'état initial, ce qui est notable, et comme pour l'essai précédent, quasiment pas affectée par rapport au composite témoin (C-5).

Des tests d'adhésion complémentaires, conduits sur les mêmes renforts métalliques et des matrices de caoutchouc similaires, ont révélé par ailleurs que les composites comportant comme seul promoteur d'adhésion le composé de lanthanide (2 ou 4 pce d'acétylacétonate de néodyme ou de samarium) en lieu et place du sel de cobalt, présentaient après vieillissement thermique et humide des forces d'adhésion (arrachement) résiduelles de 1,5 à 2,0 fois supérieures comparativement à l'emploi du sel de cobalt.

En résumé, les essais précédents démontrent clairement que les sels organiques de lanthanide sont des promoteurs très efficaces de l'adhésion entre métal et caoutchouc et permettent une augmentation notable de la durée de vie des composites métal/ caoutchouc, et donc des pneumatiques les comportant, après un vieillissement du type thermique, notamment sous conditions d'humidité.

**Tableau 1**

| Composition de caoutchouc: | M-1 | M-2 | M-3 | M-4 |
|---|---|---|---|---|
| élastomère diénique (1) | 100 | 100 | 100 | 100 |
| noir de carbone (2) | 55 | 55 | 55 | 55 |
| antioxydant (3) | 1.5 | 1.5 | 1.5 | 1.5 |
| plastifiant (huile paraffinique) | 2 | 2 | 2 | 2 |
| oxyde de zinc | 8 | 8 | 8 | 8 |
| acide stéarique | 0.6 | 0.6 | 0.6 | 0.6 |
| accepteur de méthylène (4) | 1.0 | 1.0 | 1.0 | 1.0 |
| donneur de méthylène (5) | 0.5 | 0.5 | 0.5 | 0.5 |
| composé de cobalt (6) | 1.0 | 1.0 | 1.0 | 1.0 |
| acétylacétonate de néodyme (7) | - | 1.0 | - | - |
| acétylacétonate de cérium (8) | - | - | 1.0 | - |
| acétylacétonate de samarium (9) | - | - | - | 1.0 |
| soufre | 4.5 | 4.5 | 4.5 | 4.5 |
| sulfénamide (10) | 0.8 | 0.8 | 0.8 | 0.8 |

| | | | | |
|---|---|---|---|---|
| (1) caoutchouc naturel ; (2) N330 (dénomination selon norme ASTM D-1765); (3) N-(1,3-diméthylbutyl)-N'-phényl-p-phénylènediamine ; ("Santoflex 6-PPD" de la société Flexsys); (4) résorcinol (société Sumitomo); (5) HMT (hexaméthylènetétramine - société Degussa); (6) naphténate de cobalt (Sigma-Aldrich - No. produit 544574) ; (7) Ci₅H₂₁NdO₆.xH₂O (Sigma-Aldrich No. produit 460427) ; (8) C₁₅H₂₁CeO₆.xH₂ (Sigma-Aldrich - No. produit 381403) ; (9) C₁₅H₂₁SmO₆.xH₂O (Sigma-Aldrich - No. produit 517666) ; (10) N-dicyclohexyl-2-benzothiazol-sulfénamide ("Santocure CBS" de la société Flexsys). | | | | |

**Tableau 2**

| Composition de caoutchouc: | M-5 | M-6 | M-7 | M-8 |
|---|---|---|---|---|
| élastomère diénique (1) | 100 | 100 | 100 | 100 |
| noir de carbone (2) | 55 | 55 | 55 | 55 |
| antioxydant (3) | 1.5 | 1.5 | 1.5 | 1.5 |
| plastifiant (huile paraffinique) | 2 | 2 | 2 | 2 |
| oxyde de zinc | 8 | 8 | 8 | 8 |
| acide stéarique | 0.6 | 0.6 | 0.6 | 0.6 |
| composé de cobalt (4) | 1.0 | 1.0 | 1.0 | 1.0 |
| acétylacétonate de néodyme (5) | - | 1.0 | - | - |
| acétylacétonate de cérium (6) | - | - | 1.0 | - |
| acétylacétonate de samarium (7) | - | - | - | 1.0 |
| soufre | 4.5 | 4.5 | 4.5 | 4.5 |
| sulfénamide (8) | 0.8 | 0.8 | 0.8 | 0.8 |

| | | | | |
|---|---|---|---|---|
| (1) caoutchouc naturel; (2) N330 (dénomination selon norme ASTM D-1765) ; (3) N-(1,3-diméthylbutyl)-N'-phényl-p-phénylènediamine ; ("Santoflex 6-PPD" de la société Flexsys); (4) naphténate de cobalt (Sigma-Aldrich - No. produit 544574) ; (5) C₁₅H₂₁NdO₆.xH₂O (Sigma-Aldrich - No. produit 460427) ; (6) C₁₅H₂₁CeO₆.xH₂O (Sigma-Aldrich -No. produit 381403) ; (7) C₁₅H₂₁SmO₆.xH₂O (Sigma-Aldrich - No. produit 517666) ; (8) N-dicyclohexyl-2-benzothiazol-sulfénamide ("Santocure CBS" de la société Flexsys). | | | | |

**Tableau 3**

| Composite | Fa (u.r.) à l'état initial | Fa (u.r.) après vieillissement thermique |
|---|---|---|
| C-1 (témoin) | 100 | 48 |
| C-2 (invention) | 110 | 74 |
| C-3 (invention | 104 | 96 |
| C-4 (invention) | 107 | 85 |

**Tableau 4**

| Composite | Fa (u.r.) à l'état initial | Fa (u.r.) après vieillissement thermique et humide |
|---|---|---|
| C-5 (témoin) | 100 | 35 |
| C-6 (invention) | 94 | 74 |
| C-7 (invention) | 122 | 96 |
| C-8 (invention) | 99 | 92 |

## Revendications

1. Composition de caoutchouc utilisable pour la fabrication d'un composite métal/ caoutchouc et susceptible d'adhérer à un renfort métallique, comportant au moins un élastomère diénique, une charge renforçante, un système de réticulation et entre 0,1 et 10 pce d'un composé organolanthanide choisi dans le groupe constitué par les abiétates, acétates, acétylacétonates, benzoates, butyrates, formiates, linoléates, maléates, oléates, propionates, naphténates, résinates, stéarates, et les mélanges de tels composés de lanthanide (pce signifiant parties en poids pour cent parties d'élastomère).

2. Composition selon la revendication 1, l'élastomère diénique étant choisi dans le groupe constitué par les polybutadiènes, le caoutchouc naturel, les polyisoprènes de synthèse, les copolymères de butadiène, les copolymères d'isoprène et les mélanges de ces élastomères.

3. Composition selon la revendication 2, l'élastomère diénique étant choisi dans le groupe constitué par le caoutchouc naturel, les polyisoprènes de synthèse, les copolymères d'isoprène et les mélanges de ces élastomères.

4. Composition selon la revendication 3, l'élastomère diénique étant du caoutchouc naturel ou un polyisoprène de synthèse ayant un taux de liaisons cis-1,4 supérieur à 90% (% molaire).

5. Composition selon la revendication 4, l'élastomère diénique étant un polyisoprène de synthèse ayant un taux de liaisons cis-1,4 supérieur à 98% (% molaire).

6. Composition selon l'une quelconque des revendications 1 à 5, la charge renforçante étant du noir de carbone.

7. Composition selon l'une quelconque des revendications 1 à 5, la charge renforçante étant une charge inorganique renforçante.

8. Composition selon la revendication 7, la charge inorganique renforçante étant de la silice.

9. Composition selon l'une quelconque des revendications 1 à 8, le taux de charge renforçante étant compris entre 20 et 200 pce.

10. Composition selon la revendication 9, le taux de charge renforçante étant compris entre 30 et 150 pce.

11. Composition selon l'une quelconque des revendications 1 à 10, le système de réticulation étant à base de soufre et d'un accélérateur.

12. Composition selon la revendication 11, l'accélérateur étant un accélérateur sulfénamide.

13. Composition selon la revendication 12, le taux d'accélérateur sulfénamide étant compris entre 0,5 et 10 pce.

14. Composition selon la revendication 13, le taux d'accélérateur sulfénamide étant compris entre 0,5 et 5,0 pce.

15. Composition selon l'une quelconque des revendications 11 à 14, le taux de soufre étant compris entre 0,5 et 10 pce.

16. Composition selon la revendication 15, le taux de soufre étant compris entre 1 et 8 pce.

17. Composition selon l'une quelconque des revendications 1 à 16, le lanthanide étant choisi dans le groupe constitué par lanthane, cérium, praséodyme, néodyme, samarium, erbium et les mélanges de ces terres rares.

18. Composition selon la revendication 17, le lanthanide étant le néodyme.

19. Composition selon la revendication 18, l'organolanthanide étant choisi parmi acétylacétonates et naphténates.

20. Composition selon la revendication 19, l'organolanthanide étant l'acétylacétonate de néodyme.

21. Composition selon l'une quelconque des revendications de 1 à 20, le taux de composé de lanthanide étant compris entre 0,2 et 5 pce, de préférence entre 0,5 et 2,5 pce.

22. Composition selon l'une quelconque des revendications 1 à 21, comportant en outre un composé de cobalt.

23. Composition selon la revendication 22, le composé de cobalt étant choisi parmi les abiétates, acétylacétonates, naphténates, résinates et les mélanges de tels composés.

24. Composition selon la revendication 22 ou 23, le taux de composé de cobalt étant compris entre 0,1 et 10 pce.

25. Composition selon la revendication 24, le taux de composé de cobalt étant compris entre 0,2 et 5 pce, de préférence entre 0,5 et 2,5 pce.

26. Utilisation comme promoteur d'adhésion vis-à-vis d'un renfort métallique, dans une composition de caoutchouc diénique, d'un organolanthanide choisi dans le groupe constitué par les abiétates, acétates, acétylacétonates, benzoates, butyrates, formiates, linoléates, maléates, oléates, propionates, naphténates, résinates, stéarates, et les mélanges de tels composés de lanthanide à un taux compris entre 0,1 et 10 pce (pce signifiant parties en poids pour cent parties d'élastomère).

27. Utilisation selon la revendication 26, l'organolanthanide étant choisi parmi acétylacétonates et naphténates.

28. Utilisation selon la revendication 27, l'organolanthanide étant l'acétylacétonate de néodyme.

29. Utilisation selon l'une quelconque des revendications 26 à 28, le composé de lanthanide étant associé à un composé de cobalt.

30. Utilisation selon la revendication 29, le composé de cobalt étant choisi parmi les abiétates, acétylacétonates, naphténates, résinates et les mélanges de tels composés.

31. Utilisation selon l'une quelconque des revendications 26 à 30, le métal du renfort métallique étant de l'acier.

32. Utilisation selon la revendication 31, l'acier étant un acier au carbone ou un acier inoxydable.

33. Utilisation selon la revendication 32, le métal du renfort métallique étant lui-même revêtu d'un substrat métallique.

34. Utilisation selon la revendication 33, le métal du renfort métallique étant de l'acier au carbone revêtu d'une couche de laiton comme substrat métallique.

35. Système promoteur d'adhésion métal/ caoutchouc **caractérisé en ce que** qu'il comporte en combinaison un composé de lanthanide et un composé de cobalt.

36. Système selon la revendication 35, le composé de lanthanide étant un organolanthanide.

37. Système selon la revendication 36, l'organolanthanide étant choisi dans le groupe constitué par les abiétates, acétates, acétylacétonates, benzoates, butyrates, formiates, linoléates, maléates, oléates, propionates, naphténates, résinates, stéarates, et les mélanges de tels composés, de préférence parmi acétylacétonates et naphténates.

38. Système selon la revendication 37, l'organolanthanide étant l'acétylacétonate de néodyme.

39. Système selon l'une quelconque des revendications 35 à 38, le composé de cobalt étant choisi parmi les abiétates, acétylacétonates, naphténates, résinates et les mélanges de tels composés.

40. Composite métal/ caoutchouc comportant une composition de caoutchouc diénique selon l'une quelconque des revendications 1 à 25 et au moins un renfort métallique adhérent à ladite composition de caoutchouc.

41. Composite selon la revendication 40, le métal du renfort métallique étant de l'acier.

42. Composite selon la revendication 41, l'acier étant un acier au carbone ou un acier inoxydable.

43. Composite selon la revendication 42, l'acier étant un acier au carbone ayant une teneur en carbone comprise entre 0,2% et 1,2%.

44. Composite selon la revendication 43, l'acier étant un acier au carbone ayant une teneur en carbone comprise entre 0,5% et 1,1%, de préférence entre 0,6% et 1,0%.

45. Composite selon l'une quelconque des revendications 40 à 44, l'acier étant revêtu d'une couche de laiton.

46. Utilisation d'un composite selon l'une quelconque des revendications 40 à 45 pour la fabrication ou le renforcement d'un système de liaison au sol de véhicule automobile ou d'un produit semi-fini en caoutchouc destiné à un tel système.

47. Utilisation selon la revendication 46, le système de liaison au sol consistant en un pneumatique.

48. Utilisation selon la revendication 47, pour le renforcement d'une armature de sommet, de carcasse ou de la zone bourrelet d'un pneumatique.

49. Utilisation selon la revendication 48, pour le renforcement d'une armature de sommet de pneumatique pour véhicule tourisme ou Poids-lourd.

50. Utilisation selon la revendication 49, pour le renforcement d'une armature de carcasse de pneumatique pour véhicule Poids-lourd.

51. Système de liaison au sol ou produit semi-fini en caoutchouc incorporant un composite selon l'une quelconque des revendications 40 à 45.

52. Système de liaison au sol selon la revendication 51, consistant en un pneumatique.

53. Pneumatique selon la revendication 52, le composite étant présent dans l'armature de la zone bourrelet du pneumatique.

54. Pneumatique selon la revendication 53, le composite étant présent dans l'armature de carcasse du pneumatique.

55. Pneumatique selon la revendication 54, la composition de caoutchouc du composite présentant, à l'état vulcanisé, un module sécant en extension, à 10% d'allongement, mesuré selon la norme ASTM D412, qui est inférieur à 9 MPa.

56. Pneumatique selon la revendication 55, la composition de caoutchouc du composite présentant, à l'état vulcanisé, un module sécant en extension, à 10% d'allongement, mesuré selon la norme ASTM D412, qui est compris entre 4 et 9 MPa.

57. Pneumatique selon la revendication 56, le composite étant présent dans l'armature de sommet du pneumatique.

58. Pneumatique selon la revendication 57, la composition de caoutchouc du composite présentant, à l'état vulcanisé, un module sécant en extension, à 10% d'allongement, mesuré selon la norme ASTM D412, qui est supérieur à 4 MPa.

59. Pneumatique selon la revendication 58, la composition de caoutchouc du composite présentant, à l'état vulcanisé, un module sécant en extension, à 10% d'allongement, mesuré selon la norme ASTM D412, qui est compris entre 4 et 20 MPa.

## Patentansprüche

1. Kautschukzusammensetzung, die zur Herstellung eines Metall/Kautschuk-Verbundwerkstoffs geeignet ist und auf einer Metallverstärkung haften kann, umfassend mindestens ein Dienelastomer, einen verstärkenden Füllstoff, ein Vernetzungssystem und 0,1 bis 10 phe einer Organolanthanidverbindung aus der Gruppe bestehend aus Abietaten, Acetaten, Acetylacetonaten, Benzoaten, Butyraten, Formiaten, Linoleaten, Maleaten, Oleaten, Propionaten, Naphthenaten, Resinaten, Stearaten und Mischungen derartiger Lanthanidverbindungen (wobei phe Gewichtsteile pro hundert Teile Elastomer bedeutet).

2. Zusammensetzung nach Anspruch 1, wobei das Dienelastomer aus der Gruppe bestehend aus Polybutadienen, Naturkautschuk, synthetischen Polyisoprenen, Butadien-Copolymeren, Isopren-Copolymeren und Mischungen dieser Elastomere ausgewählt ist.

3. Zusammensetzung nach Anspruch 2, wobei das Dienelastomer aus der Gruppe bestehend aus Naturkautschuk, synthetischen Polyisoprenen, Isopren-Copolymeren und Mischungen dieser Elastomere ausgewählt ist.

4. Zusammensetzung nach Anspruch 3, wobei es sich bei dem Dienelastomer um Naturkautschuk oder ein synthetisches Polyisopren mit einem Gehalt an cis-1,4-Bindungen von mehr als 90% (Mol-%) handelt.

5. Zusammensetzung nach Anspruch 4, wobei es sich bei dem Dienelastomer um ein synthetisches Polyisopren mit einem Gehalt an cis-1,4-Bindungen von mehr als 98% (Mol-%) handelt.

6. Zusammensetzung nach einem der Ansprüche 1 bis 5, wobei es sich bei dem verstärkenden Füllstoff um Ruß handelt.

7. Zusammensetzung nach einem der Ansprüche 1 bis 5, wobei es sich bei dem verstärkenden Füllstoff um einen verstärkenden anorganischen Füllstoff handelt.

8. Zusammensetzung nach Anspruch 7, wobei es sich bei dem verstärkenden anorganischen Füllstoff um Kieselsäure handelt.

9. Zusammensetzung nach einem der Ansprüche 1 bis 8, wobei der Gehalt an verstärkendem Füllstoff zwischen 20 und 200 phe liegt.

10. Zusammensetzung nach Anspruch 9, wobei der Gehalt an verstärkendem Füllstoff zwischen 30 und 150 phe liegt.

11. Zusammensetzung nach einem der Ansprüche 1 bis 10, wobei das Vernetzungssystem auf Schwefel und einem Beschleuniger basiert.

12. Zusammensetzung nach Anspruch 11, wobei es sich bei dem Beschleuniger um einen Sulfenamid-Beschleuniger handelt.

13. Zusammensetzung nach Anspruch 12, wobei der Gehalt an Sulfenamid-Beschleuniger zwischen 0,5 und 10 phe liegt.

14. Zusammensetzung nach Anspruch 13, wobei der Gehalt an Sulfenamid-Beschleuniger zwischen 0,5 und 5,0 phe liegt.

15. Zusammensetzung nach einem der Ansprüche 11 bis 14, wobei der Schwefelgehalt zwischen 0,5 und 10 phe liegt.

16. Zusammensetzung nach Anspruch 15, wobei der Schwefelgehalt zwischen 1 und 8 phe liegt.

17. Zusammensetzung nach einem der Ansprüche 1 bis 16, wobei das Lanthanid aus der Gruppe bestehend aus Lanthan, Cer, Praseodym, Neodym, Samarium, Erbium und Mischungen dieser Seltenerdmetalle ausgewählt ist.

18. Zusammensetzung nach Anspruch 17, wobei es sich bei dem Lanthanid um Neodym handelt.

19. Zusammensetzung nach Anspruch 18, wobei das Organolanthanid aus Acetylacetonaten und Naphthenaten ausgewählt ist.

20. Zusammensetzung nach Anspruch 19, wobei es sich bei dem Organolanthanid um Neodymacetylacetonat handelt.

21. Zusammensetzung nach einem der Ansprüche 1 bis 20, wobei der Gehalt an Lanthanidverbindung zwischen 0,2 und 5 phe und vorzugsweise zwischen 0,5 und 2,5 phe liegt.

22. Zusammensetzung nach einem der Ansprüche 1 bis 21, die außerdem eine Cobaltverbindung umfasst.

23. Zusammensetzung nach Anspruch 22, wobei die Cobaltverbindung aus Abietaten, Acetylacetonaten, Naphthenaten, Resinaten und Mischungen derartiger Verbindungen ausgewählt ist.

24. Zusammensetzung nach Anspruch 22 oder 23, wobei der Gehalt an Cobaltverbindung zwischen 0,1 und 10 phe liegt.

25. Zusammensetzung nach Anspruch 24, wobei der Gehalt an Cobaltverbindung zwischen 0,2 und 5 phe und vorzugsweise zwischen 0,5 und 2,5 phe liegt.

26. Verwendung eines Organolanthanids aus der Gruppe bestehend aus Abietaten, Acetaten, Acetyl-acetonaten, Benzoaten, Butyraten, Formiaten, Linoleaten, Maleaten, Oleaten, Propionaten, Naphthenaten, Resinaten, Stearaten und Mischungen derartiger Lanthanidverbindungen in einem Gehalt zwischen 0,1 und 10 phe (wobei phe Gewichtsteile pro hundert Teile Elastomer bedeutet) als Haftvermittler gegenüber einer Metallverstärkung in einer Dienkautschukzusammensetzung.

27. Verwendung nach Anspruch 26, wobei das Organo-lanthanid aus Acetylacetonaten und Naphthenaten ausgewählt ist.

28. Verwendung nach Anspruch 27, wobei es sich bei dem Organolanthanid um Neodymacetylacetonat handelt.

29. Verwendung nach einem der Ansprüche 26 bis 28, wobei die Lanthanidverbindung mit einer Cobalt-verbindung kombiniert ist.

30. Verwendung nach Anspruch 29, wobei die Cobalt-verbindung aus Abietaten, Acetylacetonaten, Naphthenaten, Resinaten und Mischungen derartiger Verbindungen ausgewählt ist.

31. Verwendung nach einem der Ansprüche 26 bis 30, wobei es sich bei dem Metall der Metallverstärkung um Stahl handelt.

32. Verwendung nach Anspruch 31, wobei es sich bei dem Stahl um unlegierten Stahl oder nichtrostenden Stahl handelt.

33. Verwendung nach Anspruch 32, wobei das Metall der Metallverstärkung selbst mit einem Metallsubstrat beschichtet ist.

34. Verwendung nach Anspruch 33, wobei es sich bei dem Metall der Metallverstärkung um unlegierten Stahl handelt, der mit einer Schicht aus Messing als Metallsubstrat beschichtet ist.

35. Metall/Kautschuk-Haftvermittlersystem, **dadurch gekennzeichnet, dass** es eine Lanthanidverbindung und eine Cobaltverbindung in Kombination umfasst.

36. System nach Anspruch 35, wobei es sich bei der Lanthanidverbindung um ein Organolanthanid handelt.

37. System nach Anspruch 36, wobei das Organolanthanid aus der Gruppe bestehend aus Abietaten, Acetaten, Acetylacetonaten, Benzoaten, Butyraten, Formiaten, Linoleaten, Maleaten, Oleaten, Propionaten, Naphthenaten, Resinaten, Stearaten und Mischungen derartiger Verbindungen, vorzugsweise aus Acetyl-acetonaten und Naphthenaten, ausgewählt ist.

38. System nach Anspruch 37, wobei es sich bei dem Organolanthanid um Neodymacetylacetonat handelt.

39. System nach einem der Ansprüche 35 bis 38, wobei die Cobaltverbindung aus Abietaten, Acetyl-acetonaten, Naphthenaten, Resinaten und Mischungen derartiger Verbindungen ausgewählt ist.

40. Metall/Kautschuk-Verbundwerkstoff, umfassend eine Dienkautschukzusammensetzung nach einem der Ansprüche 1 bis 25 und mindestens eine an der Kautschukzusammensetzung haftende Metallverstärkung.

41. Verbundwerkstoff nach Anspruch 40, wobei es sich bei dem Metall der der Metallverstärkung um Stahl handelt.

42. Verbundwerkstoff nach Anspruch 41, wobei es sich bei dem Stahl um unlegierten Stahl oder nichtrostenden Stahl handelt.

43. Verbundwerkstoff nach Anspruch 42, wobei es sich bei dem Stahl um einen unlegierten Stahl mit einem Kohlenstoffgehalt zwischen 0,2% und 1,2% handelt.

44. Verbundwerkstoff nach Anspruch 43, wobei es sich bei dem Stahl um einen unlegierten Stahl mit einem Kohlenstoffgehalt zwischen 0,5% und 1,1% und vorzugsweise zwischen 0,6% und 1,0% handelt.

45. Verbundwerkstoff nach einem der Ansprüche 40 bis 44, wobei der Stahl mit einer Messingschicht beschichtet ist.

46. Verwendung eines Verbundwerkstoffs nach einem der Ansprüche 40 bis 45 zur Herstellung oder Verstärkung eines Bodenkontaktsystems eines Kraftfahrzeugs oder eines Halbzeugs aus Kautschuk für ein derartiges System.

47. Verwendung nach Anspruch 46, wobei das Bodenkontaktsystem aus einem Reifen besteht.

48. Verwendung nach Anspruch 47 zur Verstärkung einer Scheitel-, Karkassen- oder Wulstzonenbewehrung eines Reifens.

49. Verwendung nach Anspruch 48 zur Verstärkung einer Scheitelbewehrung eines Reifens für einen Personenkraftwagen oder einen Lastkraftwagen.

50. Verwendung nach Anspruch 49 zur Verstärkung einer Karkassenbewehrung eines Reifens für einen Lastkraftwagen.

51. Bodenkontaktsystem oder Halbzeug aus Kautschuk mit einem Verbundwerkstoff nach einem der Ansprüche 40 bis 45.

52. Bodenkontaktsystem nach Anspruch 51, das aus einem Reifen besteht.

53. Reifen nach Anspruch 52, wobei der Verbundwerkstoff in der Wulstzonenbewehrung des Reifens vorliegt.

54. Reifen nach Anspruch 53, wobei der Verbundwerkstoff in der Karkassenbewehrung des Reifens vorliegt.

55. Reifen nach Anspruch 54, wobei die Kautschukzusammensetzung des Verbundwerkstoffs in vulkanisiertem Zustand einen gemäß der ASTM-Norm D412 gemessenen Dehnungssekantenmodul bei 10% Dehnung aufweist, der kleiner als 9 MPa ist.

56. Reifen nach Anspruch 55, wobei die Kautschukzusammensetzung des Verbundwerkstoffs in vulkanisiertem Zustand einen gemäß der ASTM-Norm D412 gemessenen Dehnungssekantenmodul bei 10% Dehnung aufweist, der zwischen 4 und 9 MPa liegt.

57. Reifen nach Anspruch 56, wobei der Verbundwerkstoff in der Scheitelbewehrung des Reifens vorliegt.

58. Reifen nach Anspruch 57, wobei die Kautschukzusammensetzung des Verbundwerkstoffs in vulkanisiertem Zustand einen gemäß der ASTM-Norm D412 gemessenen Dehnungssekantenmodul bei 10% Dehnung aufweist, der größer als 4 MPa ist.

59. Reifen nach Anspruch 58, wobei die Kautschukzusammensetzung des Verbundwerkstoffs in vulkanisiertem Zustand einen gemäß der ASTM-Norm D412 gemessenen Dehnungssekantenmodul bei 10% Dehnung aufweist, der zwischen 4 und 20 MPa liegt.

## Claims

1. A rubber composition usable for manufacturing a metal/rubber composite and capable of adhering to a metallic reinforcing member, comprising at least one diene elastomer, a reinforcing filler, a cross-linking system and between 0,1 and 10 phr of an organolanthanide compound selected from the group consisting of abietates, acetates, acetylacetonates, benzoates, butyrates, formates, linoleates, maleates, oleates, propionates, naphthenates, resinates, stearates, and mixtures of such compounds (phr meaning parts per hundred parts of elastomer).

2. A composition according to Claim 1, the diene elastomer being selected from the group consisting of polybutadienes, natural rubber, synthetic polyisoprenes, butadiene copolymers, isoprene copolymers and mixtures of these elastomers.

3. A composition according to Claim 2, the diene elastomer being selected from the group consisting of natural rubber, synthetic polyisoprenes, isoprene copolymers and mixtures of these elastomers.

4. A composition according to Claim 3, the diene elastomer being natural rubber or a synthetic polyisoprene having an amount of cis-1,4 bonds greater than 90% (mole %).

5. A composition according to Claim 4, the diene elastomer being a synthetic polyisoprene having an amount of cis-1,4 bonds greater than 98% (molar %).

6. A composition according to any one of Claims 1 to 5, the reinforcing filler being carbon black.

7. A composition according to any one of Claims 1 to 5, the reinforcing filler being a reinforcing inorganic filler.

8. A composition according to Claim 7, the reinforcing inorganic filler being silica.

9. A composition according to any one of Claims 1 to 8, the amount of reinforcing filler being between 20 and 200 phr.

10. A composition according to Claim 9, the amount of reinforcing filler being between 30 phr and 150 phr.

11. A composition according to any one of Claims 1 to 10, the crosslinking system being based on sulphur and an accelerator.

12. A composition according to Claim 11, the accelerator being a sulphenamide accelerator.

13. A composition according to Claim 12, the amount of sulphenamide accelerator being between 0.5 and 10 phr.

14. A composition according to Claim 13, the amount of sulphenamide accelerator being between 0.5 and 5.0 phr.

15. A composition according to any one of Claims 11 to 14, the amount of sulphur being between 0.5 and 10 phr.

16. A composition according to Claim 15, the amount of sulphur being between 1 and 8 phr.

17. A composition according to any one of Claims 1 to 16, the lanthanide being selected from the group consisting of lanthanum, cerium, praseodymium, neodymium, samarium, erbium and mixtures of these rare earths.

18. A composition according to Claim 17, the lanthanide being neodymium.

19. A composition according to Claim 18, the organolanthanide compound being selected from among acetylacetonates and naphthenates.

20. A composition according to Claim 19, the organolanthanide being neodymium acetylacetonate.

21. A composition according to any one of Claims 1 to 20, the amount of lanthanide compound being between 0.2 and 5 phr, preferably between 0.5 and 2.5 phr.

22. A composition according to any one of Claims 1 to 21, furthermore comprising a cobalt compound.

23. A composition according to Claim 22, the cobalt compound being selected from among abietates, acetylacetonates, naphthenates, resinates and mixtures of such compounds.

24. A composition according to Claim 22 or 23, the amount of cobalt compound being between 0.1 and 10 phr.

25. A composition according to Claim 24, the amount of cobalt compound being between 0.2 and 5 phr, preferably between 0.5 and 2.5 phr.

26. Use, as adhesion promoter with respect to a metallic reinforcing member, in a diene rubber composition of an organolanthanide selected from the group consisting of abietates, acetates, acetylacetonates, benzoates, butyrates, formates, linoleates, maleates, oleates, propionates, naphthenates, resinates, stearates, and mixtures of such lanthanide compounds, in an amount between 0,1 and 10 phr (phr meaning parts per hundred parts of elastomer).

27. Use according to Claim 26, the organolanthanide being selected from among acetylacetonates and naphthenates.

28. Use according to Claim 27, the organolanthanide being neodymium acetylacetonate.

29. Use according to any one of Claims 26 to 28, the lanthanide compound being associated with a cobalt compound.

30. Use according to Claim 29, the cobalt compound being selected from among abietates, acetylacetonates, naphthenates, resinates and mixtures of such compounds.

31. Use according to any one of Claims 26 to 30, the metal of the metallic reinforcing member being steel.

32. Use according to Claim 31, the steel being a carbon steel or a stainless steel.

33. Use according to Claim 32, the metal of the metallic reinforcing member being itself coated with a metallic substrate.

34. Use according to Claim 33, the metal of the metallic reinforcing member being carbon steel coated with a layer of brass as metallic substrate.

35. A metal/rubber adhesion-promoting system, **characterised in that** it comprises a lanthanide compound and a cobalt compound in combination.

36. A system according to Claim 35, the lanthanide compound being an organolanthanide.

37. A system according to Claim 36, the organolanthanide being selected from the group consisting of abietates, acetates, acetylacetonates, benzoates, butyrates, formates, linoleates, maleates, oleates, propionates, naphthenates, resinates, stearates, and mixtures of such compounds, preferably from among acetylacetonates and naphthenates.

38. A system according to Claim 37, the organolanthanide being neodymium acetylacetonate.

39. A system according to any one of Claims 35 to 38, the cobalt compound being selected from among abietates, acetylacetonates, naphthenates, resinates and mixtures of such compounds.

40. A metal/rubber composite comprising a diene rubber composition according to any one of Claims 1 to 25 and at least one metallic reinforcing member adhering to said rubber composition.

41. A composite according to Claim 40, the metal of the metallic reinforcing member being steel.

42. A composite according to Claim 41, the steel being a carbon steel or a stainless steel.

43. A composite according to Claim 42, the steel being a carbon steel having a carbon content of between 0.2% and 1.2%.

44. A composite according to Claim 43, the steel being a carbon steel having a carbon content of between 0.5% and 1.1%, preferably between 0.6% and 1.0%.

45. A composite according to any one of Claims 40 to 44, the steel being coated with a layer of brass.

46. Use of a composite according to any one of Claims 40 to 45 for the manufacture or the reinforcement of a motor-vehicle ground contact system or a semi-finished product made of rubber intended for such a system.

47. The use according to Claim 46, the ground contact system consisting of a tyre.

48. The use according to Claim 47, for the reinforcement of a crown reinforcement, carcass reinforcement or the bead zone of a tyre.

49. The use according to Claim 48 for the reinforcement of a crown reinforcement for a passenger-vehicle or heavy-vehicle tyre.

50. The use according to Claim 49 for the reinforcement of a carcass reinforcement for a heavy-vehicle tyre.

51. A ground contact or semi-finished product made of rubber incorporating a composite according to any one of Claims 40 to 45.

52. A ground contact system according to Claim 51, consisting of a tyre.

53. A tyre according to Claim 52, the composite being present in the reinforcement of the bead zone of the tyre.

54. A tyre according to Claim 53, the composite being present in the carcass reinforcement of the tyre.

55. A tyre according to Claim 54, the rubber composition of the composite having, in the vulcanised state, a secant tensile modulus, at 10% elongation, measured according to Standard ASTM D412, which is less than 9 MPa.

56. A tyre according to Claim 55, the rubber composition of the composite having, in the vulcanised state, a secant tensile modulus, at 10% elongation, measured according to Standard ASTM D412, which is between 4 and 9 MPa.

57. A tyre according to Claim 56, the composite being present in the crown reinforcement of the tyre.

58. A tyre according to Claim 57, the rubber composition of the composite having, in the vulcanised state, a secant tensile modulus, at 10% elongation, measured according to Standard ASTM D412, which is greater than 4 MPa.

59. A tyre according to Claim 58, the rubber composition of the composite having, in the vulcanised state, a secant tensile modulus, at 10% elongation, measured according to Standard ASTM D412, which is between 4 and 20 MPa.
